# FASCICULE DE BREVET EUROPEEN

(11) **EP 0 921 617 B1**
(45) Date de publication et mention de la délivrance du brevet: **18.06.2003**
(21) Numéro de dépôt: 98402994.2
(22) Date de dépôt: 30.11.1998
(51) Int. Cl.: H02G 3/10

(54) **Support pour appareillage à disposer le long d'une goulotte**
Geräteträgereinrichtung zum Einbringen auf einem Kabelkanal
Holder for apparatus to be fastened alongside a channel

(30) Priorité: 03.12.1997 FR 9715214
(43) Date de publication de la demande: 09.06.1999
(73) Titulaire: LEGRAND, F-87000 Limoges (FR); LEGRAND SNC, F-87000 Limoges (FR)
(72) Inventeur: Decore, Bertrand, 72650 la Chapelle Saint-Aubin (FR)
(74) Mandataire: Santarelli

(56) Documents cités:
- EP-A- 0 241 325
- GB-A- 2 137 025

## Description

La présente invention concerne d'une manière générale les supports pour appareillages à disposer le long d'une goulotte, qu'un tel appareillage ne soit formé que d'un simple appareil ou qu'il soit formé de deux ou plusieurs appareils disposés côte à côte.

Elle vise plus particulièrement, mais non nécessairement exclusivement, le cas où la goulotte concernée forme en saillie une moulure sur une quelconque surface, comme cela est le cas, par exemple, des goulottes implantées en plinthe au bas d'un mur.

Dans tous les cas, la goulotte sert au logement et à la protection des conducteurs ou autres canalisations nécessaires à la desserte de l'appareillage concerné, et il convient d'organiser le passage de ces conducteurs ou de ces canalisations de cette goulotte au support correspondant tout en continuant à assurer leur protection.

Les supports mis en oeuvre à cet effet comportent, globalement, une platine, qui est à rapporter sur la surface concernée, un capot, qui est apte à former avec la platine un boîtier pour l'appareillage à mettre en place, et qui, le long de celui de ses côtés par lequel il est destiné à côtoyer la goulotte, présente une ouverture, et un tiroir, qui, s'étendant à compter du capot, en correspondance avec l'ouverture de celui-ci, est destiné à recouvrir localement la goulotte.

L'une des difficultés à surmonter en la matière tient à ce que les goulottes susceptibles d'être mises en oeuvre peuvent avoir des hauteurs différentes.

Dans certaines réalisations connues à ce jour, la platine est susceptible d'être doublée par une platine supplémentaire, qui est réversible, et qui, suivant qu'elle est mise en oeuvre ou pas, et suivant son sens de pose, permet à l'ensemble de se satisfaire de trois hauteurs différentes pour la goulotte.

Cette disposition a donné et peut encore donner satisfaction.

Mais elle présente des inconvénients, qui sont les suivants.

Tout d'abord, lorsqu'elle est effectivement mise en oeuvre, la platine supplémentaire pénalise l'esthétique de l'ensemble, et il en est d'autant plus ainsi qu'il s'agit en pratique d'une pièce de taille relativement importante dans laquelle le support vient s'imbriquer.

En outre, cette platine supplémentaire étant nécessairement installée en premier lieu, elle peut exiger de manière dispendieuse un démontage complet de l'ensemble si l'installateur ne l'a malencontreusement pas mise en place dans le bon sens.

Enfin, cette platine supplémentaire a inévitablement pour objet de réduire de manière intempestive l'espace de câblage disponible à l'intérieur du support.

Dans d'autres réalisations déjà connues, le capot que comporte le support est équipé d'une languette, qui, articulée à ce capot par une charnière, est sécable, et qui, selon qu'elle est laissée en place ou qu'elle est éliminée, et selon sa position lorsqu'elle est laissée en place, permet également d'adapter l'ensemble à des goulottes de trois hauteurs différentes.

Mais cette disposition ne donne pas non plus totalement satisfaction dans la mesure où la charnière ainsi présente entre la languette et le capot constitue pour l'ensemble une zone de fragilité à l'égard des chocs mécaniques et/ou des flexions répétées, et qu'elle est donc susceptible de se trouver endommagée, au risque de nuire à l'esthétique de l'ensemble, voire même de conduire à l'absence de la languette nécessaire, si elle vient à céder complètement.

En toute hypothèse, cette disposition n'est pas non plus optimale sur le plan esthétique.

Dans le brevet européen No 0 241 325, l'ouverture du capot se trouve prédécoupée, avec d'autres, dans un flasque, qui, pour être plus facile à manipuler, aussi bien que pour pouvoir être remplacé par un auvent de raccordement lorsque le support est disposé en bout de la goulotte, est amovible.

Mais la manipulation de ce flasque impose à l'installateur une opération supplémentaire, et sa découpe est relativement délicate.

En outre, si cette découpe n'est pas effectuée de manière suffisamment rigoureuse, elle est susceptible, elle aussi, de nuire à l'esthétique de l'ensemble, voir même d'en compromettre l'utilisation effective.

La présente invention a d'une manière générale pour objet une disposition permettant de surmonter de manière plus satisfaisante cette difficulté, en évitant toute découpe.

De manière plus précise, elle a pour objet un support pour appareillage à disposer le long d'une goulotte, en particulier le long d'une goulotte formant en saillie une moulure sur une quelconque surface, ce support étant du genre comportant une platine, qui est à rapporter sur la surface concernée, un capot, qui est apte à former avec la platine un boîtier, et qui, le long de celui de ses côtés par lequel il est destiné à côtoyer la goulotte, présente une ouverture, et un tiroir, qui, s'étendant à compter du capot, en correspondance avec l'ouverture de celui-ci, est destiné à recouvrir localement la goulotte, et étant d'une manière générale caractérisé en ce qu'il comporte, en outre, sous la forme d'une pièce distincte, un adaptateur, qui, propre à être rapporté sur le capot, au droit de l'ouverture de celui-ci, est apte à établir une jonction entre ce capot et le tiroir.

En bref, suivant l'invention, pour la liaison à assurer entre le capot et le tiroir, un adaptateur se trouve spécifiquement intercalé entre ce capot et ce tiroir, pour combler l'espace susceptible d'exister à ce niveau suivant la hauteur de la goulotte.

Au bénéfice de l'esthétique de l'ensemble, aucune découpe n'est ainsi à pratiquer, sauf en ce qui concerne, éventuellement, une découpe du tiroir à la longueur nécessaire, mais, cette découpe intervenant à l'extrémité engagée du tiroir, elle n'est pas visible de l'extérieur.

Du fait du bon recouvrement qu'il est par ailleurs possible d'assurer pour les diverses pièces qui le constituent, le support suivant l'invention est avantageusement particulièrement robuste, et, notamment, il présente avantageusement une grande résistance mécanique aux chocs.

Du fait, également, de ce bon recouvrement, le support suivant l'invention possède aussi un bon degré de résistance à la pénétration des objets, notamment vis-à-vis du fil d'essai de diamètre égal à 1 mm usuellement mis en oeuvre pour un contrôle dans ce domaine.

Corollairement, l'espace interne du support suivant l'invention se trouve avantageusement optimisé, au bénéfice de l'implantation possible d'un appareil relativement haut sans que cet appareil fasse une saillie trop importante par rapport à la goulotte, et/ou au bénéfice d'une facilité accrue du câblage à effectuer.

Si désiré, l'adaptateur suivant l'invention peut suffire pour combler par lui-même l'espace susceptible d'être présent entre le capot et la goulotte à relier, et il suffit, donc, pour satisfaire à diverses hauteurs de goulotte, de disposer de divers adaptateurs présentant eux-mêmes à chaque fois une hauteur appropriée.

Mais, en variante, suivant un développement de l'invention, il est associé, à l'adaptateur, au moins une cale apte à le doubler en épaisseur le long d'une partie au moins de son contour.

Ainsi, un même adaptateur peut satisfaire à diverses hauteurs de goulotte, seule changeant, d'un cas à l'autre, la cale qui lui est associée.

Préférentiellement, des moyens d'emboîtement sont alors prévus entre la cale et l'adaptateur, pour faciliter la manipulation de l'ensemble.

Les caractéristiques et avantages de l'invention ressortiront d'ailleurs de la description qui va suivre, à titre d'exemple, en référence aux dessins schématiques annexés sur lesquels :
la figure 1 est, avec des arrachements locaux, une vue en perspective d'un support suivant l'invention, représenté en place le long d'une goulotte ;
la figure 2 est, à échelle supérieure, une vue en coupe transversale de l'ensemble, suivant la ligne brisée II-II de la figure 1 ;
la figure 3 est une vue en perspective de la platine que comporte le support suivant l'invention ;
la figure 4 est une vue en perspective du capot que comporte également le support suivant l'invention ;
la figure 5 est, à échelle supérieure, une vue partielle en coupe de ce capot, suivant la ligne V-V de la figure 4 ;
la figure 6 est une vue en perspective de l'adaptateur que comporte le support suivant l'invention ;
la figure 7 est, à échelle supérieure, une vue partielle en élévation de cet adaptateur, suivant la flèche VII de la figure 6 ;
la figure 8 en est une vue en coupe transversale, suivant la ligne VIII-VIII de la figure 6 ;
la figure 9 en est une autre vue partielle en coupe, suivant la ligne IX-IX de la figure 7 ;
la figure 10 est une vue en perspective d'une cale éventuellement associée à l'adaptateur que comporte le support suivant l'invention ;
la figure 11 est à échelle supérieure, une vue en coupe transversale de cette cale, suivant la ligne XI-XI de la figure 10.

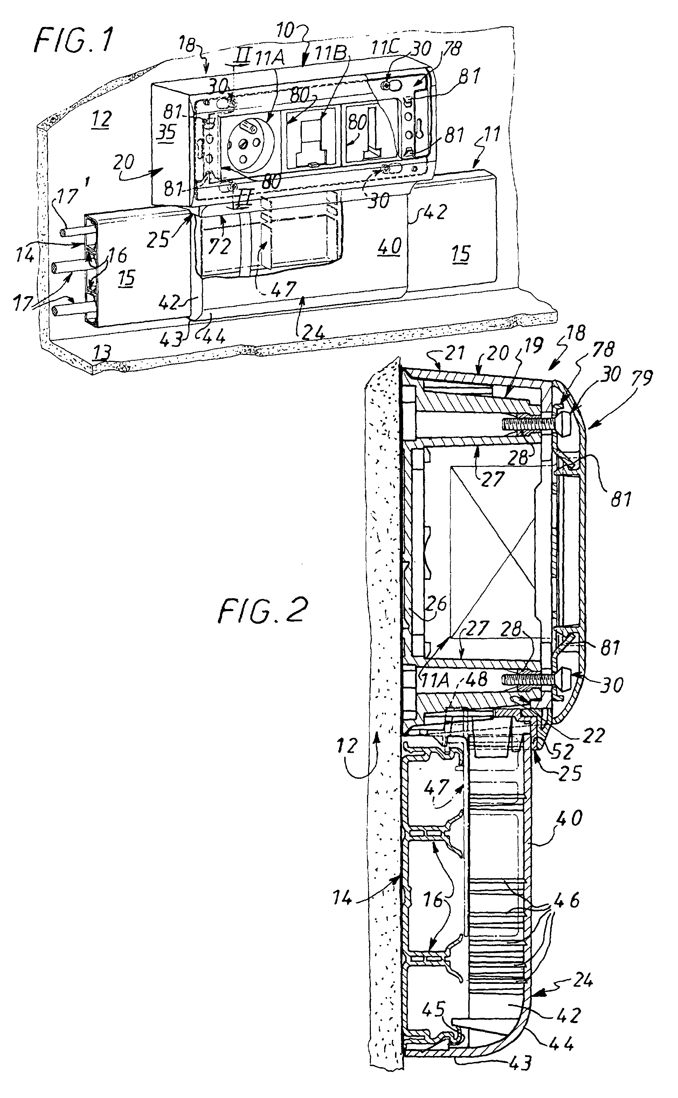

Tel qu'illustré par les figures 1 et 2, il s'agit, globalement, de disposer un quelconque appareillage 10 le long d'une quelconque goulotte 11 véhiculant les conducteurs ou canalisations propres à la desserte de cet appareillage 10.

Dans la forme de mise en oeuvre représentée, l'appareillage 10 est constitué de plusieurs appareils électriques 11A, 11B, 11C alignés les uns avec les autres.

Par exemple, et tel que représenté, trois appareils électriques 11A, 11B, 11C sont ainsi prévus, mais il va de soi que leur nombre est indifférent, et que, notamment, l'appareillage 10 pourrait ne comporter qu'un seul de ces appareils électriques 11A, 11B, 11C et/ou comporter un ou plusieurs quelconques autres appareils.

La nature des appareils électriques 11A, 11B, 11C est également indifférente.

Il peut s'agir aussi bien d'appareils électriques nécessitant un courant fort pour leur alimentation que d'appareils électriques nécessitant un courant faible.

Dans le premier cas, ils sont à raccorder à l'un ou l'autre de conducteurs électriques 17 présents dans la goulotte 11, et, dans le deuxième, à l'un ou l'autre de conducteurs électriques 17'.

Les appareils électriques 11A, 11B, 11C ne relevant de toute façon pas de la présente invention, ils ne seront pas décrits ici, et, sur la coupe de la figure 2, celui concerné, en l'espèce l'appareil électrique 11C, a en conséquence volontairement été schématisé par un simple contour barré par une croix.

Dans la forme de mise en oeuvre représentée, la goulotte 11 forme en saillie une moulure sur une quelconque surface 12.

Il s'agit, par exemple, d'un mur, et la goulotte 11 court alors par exemple en plinthe au bas de ce mur, au raccordement de celui-ci avec le sol 13 correspondant.

De manière connue en soi, la goulotte 11 comporte un socle 14, dont la section transversale est ouverte, et par lequel elle est adaptée à être rapportée sur la surface 12, et un couvercle 15, qui est adapté à être rapporté de manière amovible sur le socle 14, par exemple par encliquetage, pour la fermeture de celui-ci.

Cette goulotte 11 ne relevant pas, par elle-même, de la présente invention, elle ne sera pas décrite plus en détail ici.

Il suffira d'indiquer que, dans la forme de réalisation représentée, son socle 14 est compartimenté intérieurement par des cloisons 16 pour permettre, notamment, une séparation entre le ou les conducteurs électriques 17 véhiculant un courant fort et le ou les conducteurs électriques 17' véhiculant un courant faible.

De manière connue en soi, enfin, il est mis en oeuvre, pour l'implantation de l'appareillage 10, un support 18 comportant, globalement, une platine 19, qui est à rapporter sur la surface 12 concernée, un capot 20, qui est apte à former avec la platine 19 un boîtier 21 propre au logement des appareils électriques 11A, 11B, 11C constituant cet appareillage 10, et qui, le long de celui de ses côtés par lequel il est destiné à côtoyer la goulotte 11, présente une ouverture 22, et un tiroir 24, qui, s'étendant à compter du capot 20, en correspondance avec l'ouverture 22 de celui-ci, est destiné à recouvrir localement la goulotte 11, en se substituant localement au couvercle 15 de celle-ci, ou, plus précisément, en s'étendant longitudinalement de l'un à l'autre de deux tronçons disjoints de ce couvercle 15, et en recouvrant localement l'extrémité correspondante de chacun de ces derniers.

Suivant l'invention, le support 18 comporte, en outre, sous la forme d'une pièce distincte, et suivant des dispositions décrites plus en détail ultérieurement, un adaptateur 25, qui, propre à être rapporté sur le capot 20, au droit de l'ouverture 22 de celui-ci, est apte à établir une jonction entre ce capot 20 et le tiroir 24.

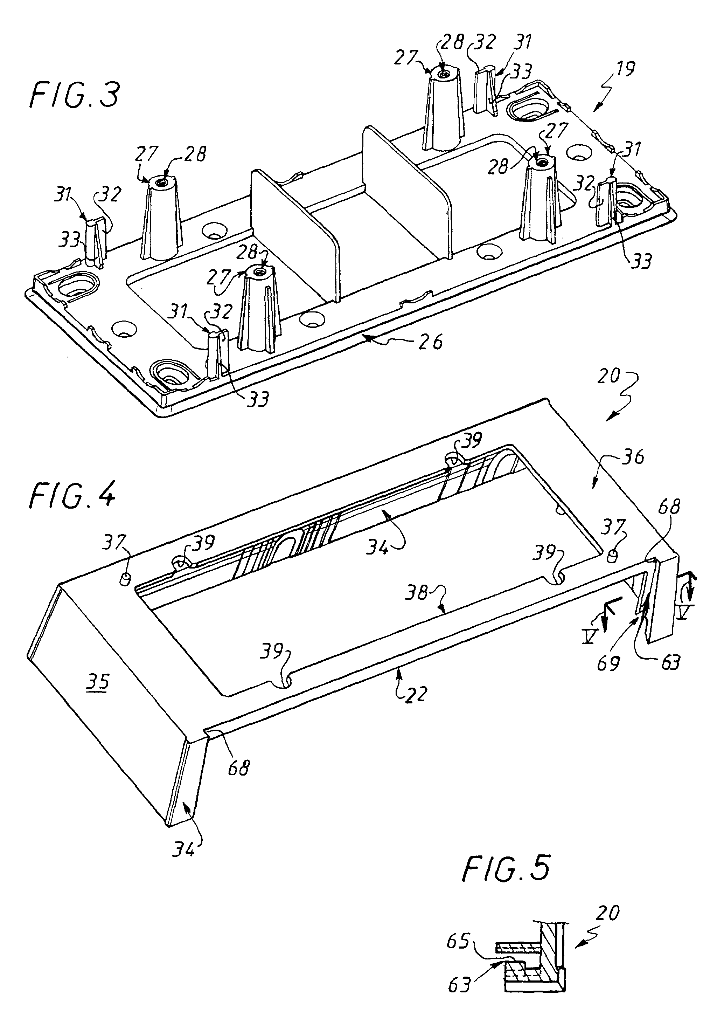

Dans la forme de réalisation représentée, et ainsi qu'il est mieux visible sur la figure 3, la platine 19 comporte une semelle 26, dont le contour est globalement rectangulaire, et par laquelle elle est adaptée à être rapportée sur la surface 12, et, en saillie sur cette semelle 26, quatre piliers 27, qui sont convenablement répartis le long de sa périphérie, et dont chacun est apte à recevoir, soit directement, soit par l'intermédiaire d'un insert 28, tel que visible pour deux d'entre eux sur la figure 2, une vis 30.

Dans la forme de réalisation représentée, la platine 19 comporte, en outre, en saillie sur sa semelle 26, à distance des piliers 27, quatre colonnettes 31, qui sont disposées le long des bords longitudinaux de cette semelle 26, à raison de deux pour chacun de ces bords longitudinaux, et à chacune desquelles est adossée, suivant une génératrice, et en direction l'une de l'autre, parallèlement aux bords longitudinaux de la semelle 26, une languette 32, avec, à la racine de cette languette 32, des nervures de rigidification 33.

Les colonnettes 31 et leurs languettes 32 ont une hauteur sensiblement moindre que celle des piliers 27.

Dans la forme de réalisation représentée, et ainsi qu'il est mieux visible sur la figure 4, le capot 20 a globalement une forme tronc-pyramidale, avec, en plan, un contour rectangulaire qui est à l'image de celui de la semelle 26 de la platine 19, et il est adapté à s'emboîter sur cette semelle 26.

Il comporte deux parois longitudinales 34, dont une, très largement ajourée par l'ouverture 22, est quasi inexistante, deux parois transversales 35, et une paroi de façade 36.

Dans la forme de réalisation représentée, la paroi de façade 36 est sensiblement plate, avec, cependant, en saillie, en positions diagonalement opposées l'un par rapport à l'autre, deux tétons 37, et, dans sa zone centrale, elle est elle-même très largement ajourée par une ouverture 38, avec, en bordure de celle-ci, en correspondance avec les piliers 27 de la platine 19, quatre encoches 39, pour le passage, chacune, d'une vis 30.

Dans la forme de réalisation représentée, et ainsi qu'il est mieux visible sur les figures 1 et 2, le tiroir 24, qui est destiné à s'étendre transversalement par rapport à la goulotte 11, comporte, quant à lui, une paroi de façade 40, deux bords tombés latéraux 42, qui s'étendent sensiblement perpendiculairement à la paroi de façade 40, et, du côté opposé à l'ouverture 22 du capot 20, un bord tombé longitudinal 43, qui se raccorde à la paroi de façade 40 par un large arrondi 44, et qui, pour recouvrir longitudinalement le socle 14 de la goulotte 11, en se crochetant sur celui-ci par un cran 45, s'étend sensiblement en hauteur au-delà des bords tombés latéraux 42.

De manière connue en soi, des zones de prédécoupage 46 sont prévues transversalement sur la paroi de façade 40 et sur les bords tombés latéraux 42 du tiroir 24, pour une éventuelle adaptation en longueur de celui-ci à la largeur de la goulotte 11, mais la hauteur de ce tiroir 24, et, plus précisément, celle de ses bords tombés latéraux 42, est immuable, l'adaptateur 25 prévu suivant l'invention étant précisément prévu pour un éventuel rattrapage en hauteur entre ce tiroir 24 et le capot 20 en fonction de la hauteur de la goulotte 11.

Si désiré, et tel que schématisé en traits interrompus sur les figures 1 et 2, le support 18 suivant l'invention peut également comporter un séparateur 47 qui, apte à être inséré entre le tiroir 24 et le socle 14 de la goulotte 11, est destiné à assurer une séparation des conducteurs électriques 17, 17' les uns par rapport aux autres lors du passage de certains au moins d'entre eux de la goulotte 11 au boîtier 21 formé conjointement par la platine 19 et le capot 20.

Ce séparateur 47 étant bien connu par lui-même, et ne relevant pas de la présente invention, il ne sera pas décrit ici.

Il suffira d'indiquer que, ainsi qu'il est mieux visible sur la figure 2, il comporte deux crochets 48 par lesquels il est apte à s'arrimer aux languettes 32 des deux colonnettes 31 de la platine 19 présentes le long du bord longitudinal de la semelle 26 de cette platine 19 sur lequel intervient l'ouverture 22 du capot 20.

C'est, d'ailleurs, pour que cette platine 19 puisse être indifféremment implantée dans un sens ou dans l'autre par rapport au capot 20, et, donc, par rapport à la goulotte 11, que deux colonnettes 31 sont prévues sur chacun des bords longitudinaux de sa semelle 26.

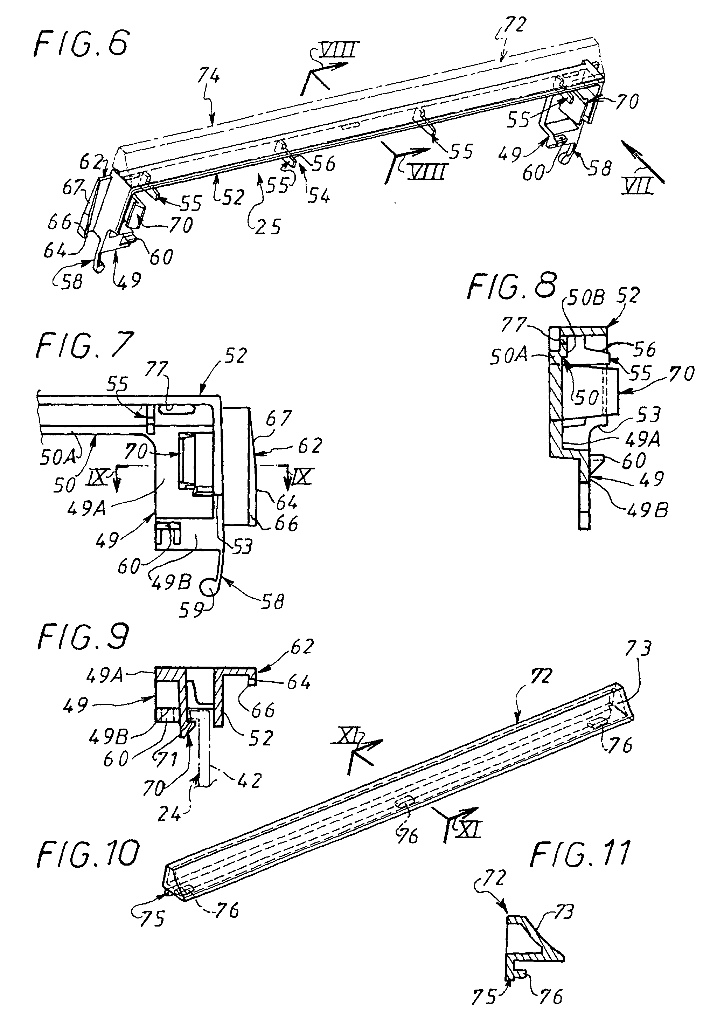

Dans la forme de réalisation représentée, et ainsi qu'il est mieux visible sur les figures 6 et 7, l'adaptateur 25 prévu suivant l'invention est en forme générale de portique, et il présente ainsi, globalement, deux montants 49 et une traverse 50, avec, sur une partie au moins du contour extérieur de l'ensemble, un rebord 52 qui s'étend en porte à faux à la manière d'une visière.

Dans la forme de réalisation représentée, une partie, au moins, de chacun des montants 49, en l'espèce leur partie supérieure 49A, c'est-à-dire celle adjacente à la traverse 50, et une partie au moins de cette traverse 50, en l'espèce sa partie inférieure 50A, c'est-à-dire celle adjacente aux montants 49, sont des éléments plats, qui, en continu les uns avec les autres, sont coplanaires, tout se passant comme si ces parties 49A, d'une part, et 50A, d'autre part, appartenaient conjointement à un seul et même flasque.

Dans la forme de réalisation représentée, la partie inférieure 49B de chacun des montants 49 est décalée vers l'avant par rapport à la partie supérieure 49A, tout en étant parallèle à celle-ci, et, de même, mais suivant une amplitude largement moindre, la partie supérieure 50B de la traverse 50 est décalée transversalement vers l'avant par rapport à la partie inférieure 50A, tout en étant parallèle à cette dernière.

Préférentiellement, et cela est le cas dans la forme de réalisation représentée, le rebord 52 que comporte l'adaptateur 25 suivant l'invention s'étend de manière continue sur la totalité de la longueur de sa traverse 50 et sur une fraction au moins de la hauteur de ses montants 49.

Par exemple, et tel que représenté, ce rebord 52 s'étend sur la quasi totalité de la hauteur de la partie supérieure 49A de chacun des montants 49, avec un décrochement 53 à son raccordement à leur partie inférieure 49B.

Dans la forme de réalisation représentée, l'adaptateur 25 prévu suivant l'invention comporte, sur la face avant de sa traverse 50, pour l'emboîtement de la tranche correspondante de la paroi de façade 40 du tiroir 24, un moyen de rainure 54.

Dans la forme de réalisation représentée, ce moyen de rainure 54 est formé entre, d'une part, le rebord 52, et, d'autre part, au moins un ergot 55 qui fait localement saillie sur la face avant de la traverse 50.

Par exemple, et tel que représenté, il y a, de place en place, en saillie sur la face avant de la traverse 50, plusieurs ergots 55, qui s'étendent parallèlement les uns aux autres.

Préférentiellement, et tel que représenté, la face de ces ergots 55 tournée vers le rebord 52 est biseautée par un chanfrein 56, pour faciliter l'engagement du tiroir 24.

Dans la forme de réalisation représentée, les ergots 55 se présentent sous la forme de languettes sensiblement plates, qui sont disposées de chant, et leur chanfrein 56 est formé sur leur tranche.

A leur racine, ces ergots 55 se raccordent, non seulement à la traverse 50, mais également au rebord 52.

Dans la forme de réalisation représentée, l'adaptateur 25 prévu suivant l'invention comporte, au pied de chacun de ses montants 49, une languette élastiquement déformable 58, qui prolonge localement vers le bas un tel montant 49, et, plus précisément, la partie inférieure 49B de celui-ci.

Préférentiellement, et cela est le cas dans la forme de réalisation représentée, la languette élastiquement déformable 58 s'étend légèrement en oblique vers l'intérieur à compter de la zone d'angle extérieure du montant 49, et, à son extrémité libre, elle présente un épanouissement 59, qui, par exemple, et tel que représenté, a un contour circulaire.

Avec un tel épanouissement 59, la languette élastiquement déformable 58 a, globalement, une configuration en virgule.

En pratique, les languettes élastiquement déformables 58 ainsi prévues au pied des montants 49 ont pour but de combler le vide susceptible de subsister latéralement à ce niveau entre le capot 20 et le couvercle 15 de la goulotte 11, leur élasticité leur permettant avantageusement de s'adapter d'elles-mêmes aux éventuelles différences de hauteur de cette goulotte 11.

Dans la forme de réalisation représentée, chacun des montants 49 de l'adaptateur 25 prévu suivant l'invention présente, localement, en saillie sur sa partie inférieure 49B, notamment pour conforter l'assise du séparateur 47 éventuellement présent, une console 60.

Préférentiellement, des moyens d'emboîtement sont prévus entre l'adaptateur 25 prévu suivant l'invention et le capot 20.

Dans la forme de réalisation représentée, ces moyens d'emboîtement comportent, sur l'adaptateur 25, deux joues 62, qui, chacune respectivement, font saillie latéralement vers l'extérieur sur les deux montants 49 de cet adaptateur 25, et, sur le capot 20, deux rainures 63, qui, chacune respectivement, s'étendent le long des deux côtés latéraux de l'ouverture 22 de ce capot 20.

Dans la forme de réalisation représentée, les joues 62 de l'adaptateur 25 comportent, chacune, au moins localement, un retour en équerre 64, et, en correspondance, les rainures 63 du capot 20 comportent, chacune, au moins localement, en bordure de leur débouché, une nervure 65 qui fait saillie sur la surface interne d'une des lèvres qui les constituent, et il s'agit, dans la forme de réalisation représentée, de celle de ces lèvres qui est la plus externe.

Préférentiellement, pour faciliter l'engagement de l'adaptateur 25 sur le capot 20, le retour en équerre 64 des joues 62 de cet adaptateur 25 est au moins localement biseauté par un chanfrein 66, 67.

Dans la forme de réalisation représentée, il y a ainsi, sur le retour en équerre 64 de chacune des joues 62, deux chanfreins 66, 67, l'un qui intervient sur la tranche de ce retour en équerre 64, l'autre qui intervient sur le flanc extérieur de celui-ci.

En pratique, les joues 62 de l'adaptateur 25 sont sensiblement dans le prolongement de la partie des montants 49 de cet adaptateur 25 à compter de laquelle elles s'étendent, et, il s'agit, dans la forme de réalisation représentée, de la partie supérieure 49A de ces montants 49.

En pratique, également, les rainures 63 du capot 20 sont ouvertes latéralement à celle de leurs extrémités qui est la plus proche de la base de ce capot 20 et fermées latéralement, par une cloison d'arrêt 68, à l'autre de leurs extrémités.

Ainsi, l'adaptateur 25 suivant l'invention doit être engagé par le bas sur le capot 20, et il ne peut échapper par le haut à celui-ci.

Dans la forme de réalisation représentée, les cloisons d'arrêt 68 correspondantes sont à niveau avec la paroi de façade 36 du capot 20.

Préférentiellement, pour faciliter l'engagement de l'adaptateur 25, l'extrémité ouverte des rainures 63 du capot 20 forme un convergent d'engagement 69, ainsi qu'il est visible pour l'une d'elles sur la figure 4.

Préférentiellement, et cela est le cas dans la forme de réalisation représentée, des moyens d'attelage sont prévus entre l'adaptateur 25 prévu suivant l'invention et le tiroir 24.

Dans la forme de réalisation représentée, ces moyens d'attelage comportent, sur l'adaptateur 25, deux pattes d'encliquetage 70, qui, chacune respectivement, font saillie frontalement sur les deux montants 49 de cet adaptateur 25, et, plus précisément, sur la partie supérieure 49A de ceux-ci, à l'intérieur du contour du rebord 52, et, sur le tiroir 24, et tel que schématisé en traits interrompus pour l'un d'eux sur la figure 9, deux crans 71, qui interviennent chacun respectivement du côté des bords tombés latéraux 42 de ce tiroir 24.

Si désiré, et cela est le cas dans la forme de réalisation représentée, à un adaptateur 25 prévu suivant l'invention est associée au moins une cale 72 apte à le doubler en épaisseur le long d'une partie au moins de son contour.

Par exemple, et tel que représenté, la cale 72 ainsi associée à l'adaptateur 25 est apte à le doubler en épaisseur tout au long de sa traverse 50.

Dans la forme de réalisation représentée, la face frontale 73 de la cale 72 s'étend globalement en oblique, de manière à raccorder en biais le capot 20 à l'adaptateur 25, à la manière d'un cornet.

La section transversale de cette cale 72 a ainsi globalement un contour en trapèze.

Préférentiellement, et cela est le cas dans la forme de réalisation représentée, des moyens d'emboîtement sont prévus entre la cale 72 et l'adaptateur 25, pour une solidarisation débrayable de cette cale 72 à cet adaptateur 25 et la constitution ainsi d'un sous-ensemble unitaire 74 entre eux.

Dans la forme de réalisation représentée, ces moyens d'emboîtement comportent, sur la cale 72, une languette 75, sur laquelle font saillie, de place en place, des plots 76, et, sur la traverse 50 de l'adaptateur 25, en correspondance avec ces plots 76, des logements 77 propres à l'engagement de ceux-ci.

En pratique, ces logements 77 sont des perçages, et ceux-ci traversent de part en part la traverse 50, et plus précisément la partie supérieure 50B de cette traverse 50, au ras du rebord 52.

Ainsi qu'il est aisé de le comprendre, le décalage intervenant entre la partie supérieure 50B de la traverse 50 et sa partie inférieure 50A permet à cette traverse 50 de recevoir la languette 75 de la cale 72 sans que cette languette 75 fasse saillie au dos de l'adaptateur 25.

Préférentiellement, et tel que représenté, la cale 72 est évidée, pour son allégement aussi bien que pour en faciliter le moulage.

Ainsi qu'il est aisé de le comprendre, il peut ainsi être associé, à l'adaptateur 25 suivant l'invention, un jeu de cales 72 d'épaisseurs différentes, à charge, pour l'installateur, de choisir parmi ces cales 72 celle convenant à la hauteur de la goulotte 11.

Par mesure de simplicité, seule l'une des cales 72 a été représentée sur les figures.

Dans la forme de réalisation représentée, le capot 20 du support 18 suivant l'invention est rendu solidaire de la platine 19 par l'intermédiaire d'une plaque 78, qui, superposée à ce capot 20, en s'emboîtant sur les tétons 37 de celui-ci par des perçages non visibles sur les figures, est solidarisée à la platine 19 par les vis 30, et qui, tel que représenté, peut elle-même être superposée par un enjoliveur 79 présentant, de place en place, des ajours 80 pour donner accès aux appareils électriques 11A, 11B, 11C.

Par exemple, et tel que représenté, l'enjoliveur 79 est rapporté par encliquetage sur la plaque 78, à la faveur de pattes 81 venues d'un seul tenant par crevés de celle-ci.

Les dispositions correspondantes étant d'ailleurs bien connues par elles-mêmes, elles ne seront pas décrites plus en détail ici.

Au montage, l'installateur choisit parmi les cales 72 à sa disposition celle adaptée à la hauteur de la goulotte 11, si la présence d'une telle cale 72 est nécessaire.

Il rapporte, alors, cette cale 72 sur l'adaptateur 25, par simple emboîtement de cette cale 72 sur celui-ci.

Il rapporte alors sur le tiroir 24 le sous-ensemble unitaire 74 ainsi formé, et, la platine 19 étant supposée en place, il met en place, sur le socle 14 de la goulotte 11, l'ensemble précédemment constitué.

II suffit, ensuite, à l'installateur, de rapporter, sur la platine 19, le capot 20, puis, après avoir mis en place la plaque 78, de solidariser l'ensemble à la platine 19 par les vis 30.

Les montants 49 de l'adaptateur 25 s'étendent alors chacun respectivement entre les rainures 63 du capot 20 et les colonnettes 31 correspondantes de la platine 19.

Suivant une variante de réalisation non représentée, il est tiré parti de la robustesse de l'ensemble ainsi constitué pour supprimer, sur une partie au moins de sa longueur, la bande étroite de la paroi de façade 36 du capot 20 séparant de l'ouverture 22 l'ouverture 38 de cette paroi de façade 36, notamment entre les deux encoches 39.

Cet allégement de structure, qui est sans répercussion sur la résistance mécanique de l'ensemble, facilite avantageusement le passage des conducteurs électriques 17, 17' lors de l'installation.

Suivant un développement de cette variante de réalisation, les cloisons d'arrêt 68 bloquant vers le haut le sous-ensemble 74 formé de l'adaptateur 25 et d'une éventuelle cale 72 sont supprimées, ce qui permet une mise en place, et un retrait, par le haut, de ce sous-ensemble 74, et ce qui permet, ainsi, d'avoir accès au câblage sans avoir à procéder à une quelconque dépose de tout ou partie de l'appareillage 10.

La présente invention ne se limite d'ailleurs pas à la forme de réalisation décrite et représentée, mais englobe toute variante d'exécution telle que définie par les revendications.

## Revendications

1. Support pour appareillage à disposer le long d'une goulotte, en particulier le long d'une goulotte formant en saillie une moulure sur une quelconque surface, du genre comportant une platine (19), qui est à rapporter sur la surface (12) concernée, un capot (20), qui est apte à former avec la platine (19) un boîtier (21), et qui, le long de celui de ses côtés par lequel il est destiné à côtoyer la goulotte (11), présente une ouverture (22), et un tiroir (24), qui, s'étendant à compter du capot (20), en correspondance avec l'ouverture (22) de celui-ci, est destiné à recouvrir localement la goulotte (11), **caractérisé en ce qu'**il comporte, en outre, sous la forme d'une pièce distincte, un adaptateur (25), qui, propre à être rapporté sur le capot (20), au droit de l'ouverture (22) de celui-ci, est apte à établir une jonction entre ce capot (20) et le tiroir (24).

2. Support suivant la revendication 1, **caractérisé en ce que** l'adaptateur (25) est en forme générale de portique et présente, globalement, deux montants (49) et une traverse (50), avec, sur une partie au moins du contour extérieur de l'ensemble, un rebord (52) qui s'étend en porte à faux à la manière d'une visière.

3. Support suivant la revendication 2, **caractérisé en ce que** le rebord (52) que comporte l'adaptateur (25) s'étend de manière continue sur la totalité de la longueur de sa traverse (50) et sur une fraction au moins de la hauteur de ses montants (49).

4. Support suivant l'une quelconque des revendications 2, 3, **caractérisé en ce qu'**une partie au moins de chacun des montants (49) de l'adaptateur (25) et une partie au moins de sa traverse (50) sont des éléments plats, qui, en continu les uns avec les autres, sont coplanaires.

5. Support suivant l'une quelconque des revendications 2 à 4, **caractérisé en ce que** l'adaptateur (25) comporte, sur la face avant de sa traverse (50), un moyen de rainure (54).

6. Support suivant la revendication 5, **caractérisé en ce que** le moyen de rainure (54) est formé entre, d'une part, le rebord (52), et, d'autre part, au moins un ergot (55) qui fait localement saillie sur la face avant de la traverse (50).

7. Support suivant la revendication 6, **caractérisé en ce que** la face de l'ergot (55) tournée vers le rebord (52) est biseautée par un chanfrein (56).

8. Support suivant l'une quelconque des revendications 6, 7, **caractérisé en ce qu'**il y a, de place en place, plusieurs ergots (55) en saillie sur la face avant de la traverse (50).

9. Support suivant l'une quelconque des revendications 2 à 8, **caractérisé en ce que** l'adaptateur (25) comporte, au pied de chacun de ses montants (49), une languette élastiquement déformable (58), qui prolonge localement vers le bas un tel montant (49).

10. Support suivant la revendication 9, **caractérisé en ce que** la languette élastiquement déformable (58) s'étend légèrement en oblique vers l'intérieur à compter de la zone d'angle extérieure du montant (49).

11. Support suivant l'une quelconque des revendications 9, 10, **caractérisé en ce que** la languette élastiquement déformable (58) présente un épanouissement (59) à son extrémité libre.

12. Support suivant l'une quelconque des revendications 2 à 11, **caractérisé en ce que** la partie inférieure (49B) de chacun des montants (49) de l'adaptateur (25) est décalée vers l'avant par rapport à sa partie supérieure (49A).

13. Support suivant l'une quelconque des revendications 2 à 12, **caractérisé en ce que** chacun des montants (49) de l'adaptateur (25) présente, localement, en saillie sur sa partie inférieure (49B), une console (60).

14. Support suivant l'une quelconque des revendications 2 à 13, **caractérisé en ce que** des moyens d'emboîtement sont prévus entre l'adaptateur (25) et le capot (20).

15. Support suivant la revendication 14, **caractérisé en ce que** les moyens d'emboîtement prévus entre l'adaptateur (25) et le capot (20) comportent, sur l'adaptateur (25), deux joues (62), qui, chacune respectivement, font saillie latéralement vers l'extérieur sur les deux montants (49) de cet adaptateur (25), et, sur le capot (20), deux rainures (63), qui, chacune respectivement, s'étendent le long des deux côtés latéraux de l'ouverture (22) de ce capot (20).

16. Support suivant la revendication 15, **caractérisé en ce que** les joues (62) de l'adaptateur (25) comportent, chacune, au moins localement, un retour en équerre (64), et, en correspondance, les rainures (63) du capot (20) comportent, chacune, au moins localement, en bordure de leur débouché, une nervure (65) qui fait saillie sur la surface interne d'une des lèvres qui les constituent.

17. Support suivant la revendication 16, **caractérisé en ce que** le retour en équerre (64) des joues (62) de l'adaptateur (25) est au moins localement biseauté par un chanfrein (66, 67).

18. Support suivant l'une quelconque des revendications 15 à 17, **caractérisé en ce que** les rainures (63) du capot (20) sont ouvertes latéralement à celle de leurs extrémités qui est la plus proche de la base du capot (20) et fermées latéralement à l'autre de leurs extrémités.

19. Support suivant la revendication 18, **caractérisé en ce que** l'extrémité ouverte des rainures (63) du capot (20) forme un convergent d'engagement (69).

20. Support suivant l'une quelconque des revendications 15 à 19, **caractérisé en ce que** les joues (62) de l'adaptateur (25) sont sensiblement dans le prolongement de la partie des montants (49) à compter de laquelle elles s'étendent.

21. Support suivant l'une quelconque des revendications 2 à 14, **caractérisé en ce que** des moyens d'attelage sont prévus entre l'adaptateur (25) et le tiroir (24).

22. Support suivant la revendication 21, **caractérisé en ce que** les moyens d'attelage prévus entre l'adaptateur (25) et le tiroir (24) comportent, sur l'adaptateur (25), deux pattes d'encliquetage (70), qui, chacune respectivement, font saillie frontalement sur les deux montants (49) de cet adaptateur (25), à l'intérieur du contour du rebord (52), et, sur le tiroir (24), deux crans (71), qui interviennent chacun respectivement du côté des bords tombés latéraux (42) de ce tiroir (24).

23. Support suivant l'une quelconque des revendications 1 à 22, **caractérisé en ce que**, à l'adaptateur (25), est associée au moins une cale (72) apte à le doubler en épaisseur le long d'une partie au moins de son contour.

24. Support suivant les revendications 2 et 23, prises conjointement, **caractérisé en ce que** la cale (72) associée à l'adaptateur (25) est apte à le doubler en épaisseur tout au long de sa traverse (50).

25. Support suivant l'une quelconque des revendications 23, 24, **caractérisé en ce que** la face frontale (73) de la cale (72) s'étend globalement en oblique, de manière à raccorder en biais le capot (20) à l'adaptateur (25).

26. Support suivant l'une quelconque des revendications 22 à 25, **caractérisé en ce que** des moyens d'emboîtement sont prévus entre la cale (72) et l'adaptateur (25).

27. Support suivant la revendications 26, **caractérisé en ce que** les moyens d'emboîtement prévus entre la cale (72) et l'adaptateur (25) comportent, sur la cale (72), une languette (75), sur laquelle font saillie, de place en place, des plots (76), et, sur la traverse (50) de l'adaptateur (25), en correspondance avec ces plots (76), des logements (77) propres à l'engagement de ceux-ci.

28. Support suivant la revendication 27, **caractérisé en que** les logements (77) sont des perçages.

29. Support suivant l'une quelconque des revendications 27, 28, **caractérisé en ce que** la partie supérieure (50B) de la traverse (50) de l'adaptateur (25) est décalée transversalement vers l'avant par rapport à sa partie inférieure (50A).

30. Support suivant l'une quelconque des revendications 23 à 29, **caractérisé en ce que**, à l'adaptateur (25), est associé un jeu de cales (72) d'épaisseurs différentes.

31. Support suivant l'une quelconque des revendications 1 à 30, **caractérisé en ce que** le capot (20) est rendu solidaire de la platine (19) par l'intermédiaire d'une plaque (78), qui, superposée au capot (20), est solidarisée à la platine (19) par des vis (30), et qui peut elle-même être superposée par un enjoliveur (79).

## Claims

1. A support for equipment to be disposed along a duct, in particular along a duct forming a moulding in projecting relationship on any surface, of the kind comprising a plate (19) which is to be fitted to the surface (12) in question, a cover (20) which is capable with the plate (19) of forming a casing (21) and which, along that one of its sides by way of which it is intended to border the duct (11), has an opening (22), and a box member (24) which, extending from the cover (20), in corresponding relationship with the opening (22) thereof, is intended to cover locally the duct (11), **characterised in that** it further comprises in the form of a separate component an adaptor (25) which, suitable for being fitted on to the cover (20) in line with the opening (22) thereof, is capable of establishing a junction between said cover (20) and the box member (24).

2. A support according to claim 1 **characterised in that** the adaptor (25) is in the general form of a portal member and has generally two uprights (49) and a transverse portion (50), with, over a part at least of the external contour of the assembly, a rim (52) which extends in cantilever relationship in the manner of a visor.

3. A support according to claim 2 **characterised in that** the rim (52) that the adaptor (25) comprises extends continuously over the whole of the length of its transverse portion (50) and over a fraction at least of the height of its uprights (49).

4. A support according to either one of claims 2 and 3 **characterised in that** a part at least of each of the uprights (49) of the adaptor (25) and a part at least of its transverse portion (50) are flat elements which in mutually continuous relationship are coplanar.

5. A support according to any one of claims 2 to 4 **characterised in that**, on the front face of its transverse portion (50), the adaptor (25) comprises a groove means (54).

6. A support according to claim 5 **characterised in that** the groove means (54) is formed between on the one hand the rim (52) and on the other hand at least one lug (55) which projects locally on the front face of the transverse portion (50).

7. A support according to claim 6 **characterised in that** the face of the lug (55), which is towards the rim (52), is bevelled by a chamfer (56).

8. A support according to either one of claims 6 and 7 **characterised in that** there are a plurality of lugs (55) at spaced locations in projecting relationship on the front face of the transverse portion (50).

9. A support according to any one of claims 2 to 8 **characterised in that**, at the foot of each of its uprights (49), the adaptor (25) comprises an elastically deformable tongue portion (58) which prolongs such an upright (49) locally downwardly.

10. A support according to claim 9 **characterised in that** the elastically deformable tongue portion (58) extends slightly obliquely inwardly from the external angle zone of the upright (49).

11. A support according to either one of claims 9 and 10 **characterised in that** the elastically deformable tongue portion (58) has an enlargement (59) at its free end.

12. A support according to any one of claims 2 to 11 **characterised in that** the lower part (49B) of each of the uprights (49) of the adaptor (25) is displaced forwardly with respect to its upper part (49A).

13. A support according to any one of claims 2 to 12 **characterised in that** each of the uprights (49) of the adaptor (25) locally has a bracket (60) in projecting relationship on its lower part (49B).

14. A support according to any one of claims 2 to 13 **characterised in that** engagement means are provided between the adaptor (25) and the cover (20).

15. A support according to claim 14 **characterised in that** the engagement means provided between the adaptor (25) and the cover (20) comprise, on the adaptor (25), two side plate portions (62) which each respectively project laterally outwardly on the two uprights (49) of said adaptor (25) and, on the cover (60), two grooves (63) which each respectively extend along the two lateral sides of the opening (22) of said cover (20).

16. A support according to claim 15 **characterised in that** the side plate portions (62) of the adaptor (25) each comprise at least locally a right-angled flange portion (64) and in corresponding relationship the grooves (63) of the cover (2) each at least locally comprise at the edge of their mouth opening a rib (65) which projects from the internal surface of one of the lips which constitute them.

17. A support according to claim 16 **characterised in that** the right-angled flange portion (64) of the side plate portions (62) of the adaptor (25) is at least locally bevelled by a chamfer (66, 67).

18. A support according to any one of claims 15 to 17 **characterised in that** the grooves (63) of the cover (20) are open laterally at that one of their ends which is closest to the base of the cover (20) and closed laterally at the other of their ends.

19. A support according to claim 18 **characterised in that** the open end of the grooves (63) of the cover (20) forms a convergent engagement configuration (69).

20. A support according to any one of claims 15 to 19 **characterised in that** the side plate portions (62) of the adaptor (25) are substantially in line with the part of the uprights (49), from which the side plate portions extend.

21. A support according to any one of claims 2 to 14 **characterised in that** coupling means are provided between the adaptor (25) and the box member (24).

22. A support according to claim 21 **characterised in that** the coupling means provided between the adaptor (25) and the box member (24) comprise on the adaptor (25) two latching lugs (70) which each respectively project frontally from the two uprights (49) of said adaptor (25) in the interior of the contour of the rim (52) and, on the box member (24), two catches (71) which are each respectively operatively disposed at the side of the lateral dropped edges (42) of said box member (24).

23. A support according to any one of claims 1 to 22 **characterised in that** associated with the adaptor (25) is at least one packing piece (72) capable of doubling it in thickness along a part at least of its contour.

24. A support according to claims 2 and 23 in combination **characterised in that** the packing piece (72) associated with the adaptor (25) is capable of doubling it in thickness all along its transverse portion (50).

25. A support according to either one of claims 23 and 24 **characterised in that** the front face (73) of the packing piece (72) extends generally obliquely in such a way as to slopingly connect the cover (20) to the adaptor (25).

26. A support according to any one of claims 22 to 25 **characterised in that** engagement means are provided between the packing piece (72) and the adaptor (25).

27. A support according to claim 26 **characterised in that** the engagement means provided between the packing piece (72) and the adaptor (25) comprise on the packing piece (72) a tongue portion (75) from which studs (76) project in mutually spaced relationship and, on the transverse portion (50) of the adaptor (25), in corresponding relationship with said studs (76), housings (77) for engagement thereof.

28. A support according to claim 27 **characterised in that** the housings (77) are apertures.

29. A support according to either one of claims 27 and 28 **characterised in that** the upper part (50B) of the transverse portion (50) of the adaptor (25) is displaced transversely forwardly with respect to its lower part (50A).

30. A support according to any one of claims 23 to 29 **characterised in that** associated with the adaptor (25) is a set of packing pieces (72) of differing thicknesses.

31. A support according to any one of claims 1 to 30 **characterised in that** the cover (20) is fixed with respect to the plate (19) by way of a plate portion (78) which, in superposed relationship with the cover (20), is fixed to the plate (17) by screws (30) and which itself can have an embellisher portion (79) in superposed relationship with it.

## Patentansprüche

1. Gerätehalter, der auf einem Leitungskanal, insbesondere auf einem Leitungskanal, der auf einer beliebigen Fläche eine vorstehende Leiste bildet, anzuordnen ist und eine Platine (19) aufweist, die an der betreffenden Fläche (12) anzubringen ist, sowie eine Kappe (20), die mit der Platine (19) ein Gehäuse (21) bilden kann und längs derjenigen ihrer Seiten, mit der sie dazu bestimmt ist, an den Leitungskanal (11) anzugrenzen, eine Öffnung (22) aufweist, und einen Schieber (24), der sich von der Kappe (20) aus in Entsprechung mit deren Öffnung (22) erstreckt und dazu bestimmt ist, den Leitungskanal (11) örtlich abzudecken, **dadurch gekennzeichnet, daß** er außerdem in Form eines getrennten Teils einen Adapter (25) aufweist, der auf der Kappe (20) auf Höhe deren Öffnung (22) angebracht werden kann und eine Verbindung zwischen dieser Kappe (20) und dem Schieber (24) herstellen kann.

2. Halter nach Anspruch 1, **dadurch gekennzeichnet, daß** der Adapter (25) allgemein brückenförmig ist und insgesamt zwei Stützen (49) und eine Querleiste (50) mit mindestens auf einem Teil des Außenumrisses der Einheit einem abgewinkelten Rand (52) aufweist, der sich nach der Art eines Schirms auskragend erstreckt.

3. Halter nach Anspruch 2, **dadurch gekennzeichnet, daß** der abgewinkelte Rand (52), den der Adapter (25) aufweist, sich durchgehend über die gesamte Länge seiner Querleiste (50) und über mindestens einen Teil der Höhe seiner Stützen (49) erstreckt.

4. Halter nach einem der Ansprüche 2, 3, **dadurch gekennzeichnet, daß** mindestens ein Teil jeder der Stützen (49) des Adapters (25) und mindestens ein Teil seiner Querleiste (50) flache Elemente sind, die miteinander kontinuierlich koplanar sind.

5. Halter nach einem der Ansprüche 2 bis 4, **dadurch gekennzeichnet, daß** der Adapter (25) auf der Vorderseite seiner Querleiste (50) ein Nutmittel (54) aufweist.

6. Halter nach Anspruch 5, **dadurch gekennzeichnet, daß** das Nutmittel (54) zwischen einerseits dem abgewinkelten Rand (52) und andererseits mindestens einem Stift (55) gebildet ist, der örtlich an der Vorderseite der Querleiste (50) vorsteht.

7. Halter nach Anspruch 6, **dadurch gekennzeichnet, daß** die dem abgewinkelten Rand (52) zugewandte Seite des Stifts (55) mit einer Abschrägung (56) versehen ist.

8. Halter nach einem der Ansprüche 6, 7, **dadurch gekennzeichnet, daß** in Abständen mehrere Stifte (55) auf der Vorderseite der Querleiste (50) vorstehend vorgesehen sind.

9. Halter nach einem der Ansprüche 2 bis 8, **dadurch gekennzeichnet, daß** der Adapter (25) am Fuß jeder seiner Stützen (49) eine elastisch verformbare Zunge (58) aufweist, die eine solche Stütze (49) örtlich nach unten verlängert.

10. Halter nach Anspruch 9, **dadurch gekennzeichnet, daß** die elastisch verformbare Zunge (58) sich von der äußeren Eckzone der Stütze (49) aus leicht schräg nach innen erstreckt.

11. Halter nach einem der Ansprüche 9, 10, **dadurch gekennzeichnet, daß** die elastisch verformbare Zunge (58) an ihrem freien Ende eine Ausweitung (59) aufweist.

12. Halter nach einem der Ansprüche 2 bis 11, **dadurch gekennzeichnet, daß** der untere Teil (49B) jeder der Stützen (49) des Adapters (25) bezüglich ihres oberen Teils (49A) nach vorne versetzt ist.

13. Halter nach einem der Ansprüche 2 bis 12, **dadurch gekennzeichnet, daß** jede der Stützen (49) des Adapters (25) örtlich auf ihrem unteren Teil (49B) eine Konsole (60) aufweist.

14. Halter nach einem der Ansprüche 2 bis 13, **dadurch gekennzeichnet, daß** zwischen dem Adapter (25) und der Kappe (20) Einsteckmittel vorgesehen sind.

15. Halter nach Anspruch 14, **dadurch gekennzeichnet, daß** die zwischen dem Adapter (25) und der Kappe (20) vorgesehenen Einsteckmittel auf dem Adapter (25) zwei Wangen (62), die jeweils seitlich auf den beiden Stützen (49) des Adapters (25) nach außen vorstehen, und auf der Kappe (20) zwei Nuten (63) aufweisen, die sich jeweils längs der beiden seitlichen Seiten der Öffnung (22) dieser Kappe (20) erstrecken.

16. Halter nach Anspruch 15, **dadurch gekennzeichnet, daß** die Wangen (62) des Adapters (25) jeweils mindestens örtlich eine rechtwinklige Abwinklung (64) aufweisen und die Nuten (63) der Kappe (20) in Entsprechung jeweils mindestens örtlich am Rande ihrer Mündung eine Rippe (65) aufweisen, die auf der Innenseite einer der sie bildenden Lippen vorsteht.

17. Halter nach Anspruch 16, **dadurch gekennzeichnet, daß** die rechtwinklige Abwinklung (64) der Wangen (62) des Adapters (25) mindestens örtlich mit einer Abschrägung (66, 67) versehen ist.

18. Halter nach einem der Ansprüche 15 bis 17, **dadurch gekennzeichnet, daß** die Nuten (63) der Kappe (20) seitlich an demjenigen ihrer Enden offen sind, das der Basis der Kappe (20) am nächsten ist, und seitlich am anderen ihrer Enden geschlossen sind.

19. Halter nach Anspruch 18, **dadurch gekennzeichnet, daß** das offene Ende der Nuten (63) der Kappe (20) ein konvergierendes Einführungsorgan (69) bildet.

20. Halter nach einem der Ansprüche 15 bis 19, **dadurch gekennzeichnet, daß** die Wangen (62) des Adapters (25) im wesentlichen in der Verlängerung des Teils der Stützen (49) liegen, von dem aus sie sich erstrecken.

21. Halter nach einem der Ansprüche 2 bis 14, **dadurch gekennzeichnet, daß** zwischen dem Adapter (25) und dem Schieber (24) Kupplungsmittel vorgesehen sind.

22. Halter nach Anspruch 21, **dadurch gekennzeichnet, daß** die zwischen dem Adapter (25) und dem Schieber (24) vorgesehenen Kupplungsmittel auf dem Adapter (25) zwei Einklinklappen (70), die jeweils auf den beiden Stützen (49) des Adapters (25) im Inneren des Umrisses des abgewinkelten Rands (52) frontal vorstehen, und auf dem Schieber (24) zwei Rasten (71) umfassen, die jeweils neben den abgewinkelten Seitenrändern (42) dieses Schiebers (24) angeordnet sind.

23. Halter nach einem der Ansprüche 1 bis 22, **dadurch gekennzeichnet, daß** dem Adapter (25) mindestens ein Einsatz (72) zugeordnet ist, der diesen längs mindestens eines Teils seines Umrisses in der Dicke doppeln kann.

24. Halter nach den Ansprüchen 2 und 23 zusammen, **dadurch gekennzeichnet, daß** der dem Adapter (25) zugeordnete Einsatz (72) diesen längs seiner Querleiste (50) in der Dicke doppeln kann.

25. Halter nach einem der Ansprüche 23, 24, **dadurch gekennzeichnet, daß** die Frontseite (73) des Einsatzes (72) sich insgesamt schräg so erstreckt, daß die Kappe (20) schräg an den Adapter (25) angeschlossen wird.

26. Halter nach einem der Ansprüche 22 bis 25, **dadurch gekennzeichnet, daß** zwischen dem Einsatz (72) und dem Adapter (25) Einsteckmittel vorgesehen sind.

27. Halter nach Anspruch 26, **dadurch gekennzeichnet, daß** die zwischen dem Einsatz (72) und dem Adapter (25) vorgesehenen Einsteckmittel auf dem Einsatz (72) eine Zunge (75), auf der in Abständen Klötze (76) vorstehen, und auf der Querleiste (50) des Adapters (25) in Entsprechung mit den Klötzen (76) Aufnahmen (77) zu deren Einstecken aufweisen.

28. Halter nach Anspruch 27, **dadurch gekennzeichnet, daß** die Aufnahmen (77) Bohrungen sind.

29. Halter nach einem der Ansprüche 27, 28, **dadurch gekennzeichnet, daß** der obere Teil (50B) der Querleiste (50) des Adapters (25) bezüglich ihres unteren Teils (50A) in Querrichtung nach vorne versetzt ist.

30. Halter nach einem der Ansprüche 23 bis 29, **dadurch gekennzeichnet, daß** dem Adapter (25) ein Satz von Einsätzen (72) mit verschiedenen Dicken zugeordnet ist.

31. Halter nach einem der Ansprüche 1 bis 30, **dadurch gekennzeichnet, daß** die Kappe (20) mit der Platine (19) über eine Platte (78) fest verbunden ist, die der Kappe (20) überlagert ist und mit der Platine (19) durch Schrauben (30) verbunden ist und der ihrerseits eine Abdeckung (79) überlagert sein kann.
